# EUROPEAN PATENT SPECIFICATION

(11) **EP 2 982 989 B1**
(45) Date of publication and mention of the grant of the patent: **07.11.2018**
(21) Application number: 14778918.4
(22) Date of filing: 04.04.2014
(51) Int. Cl.: B01L 3/00, G01N 35/02, G01N 35/00

(54) **RECEPTACLE CONTAINING TEST REAGENT**
BEHÄLTER MIT EINEM TESTREAGENS
RÉCIPIENT CONTENANT UN RÉACTIF D'ESSAI

(30) Priority: 05.04.2013 JP 2013079195
(43) Date of publication of application: 10.02.2016
(73) Proprietor: Nichirei Biosciences Inc., Chuo-ku Tokyo 104-8402 (JP)
(72) Inventor: HAGIWARA Shizuo, Higashimurayama-shi Tokyo 189-0003 (JP); HORIKOSHI Noboru, Higashimurayama-shi Tokyo 189-0003 (JP); SUZUKI Kenji, Higashimurayama-shi Tokyo 189-0003 (JP); KASAMATSU Toshiyuki, Higashimurayama-shi Tokyo 189-0003 (JP)
(74) Representative: TBK
(86) International application number: PCT/JP2014/059998
(87) International publication number: WO 2014/163190

(56) References cited:
- WO-A1-2010/058736
- WO-A1-2011/108134
- WO-A1-2011/108134
- WO-A2-2013/034469
- JP-A- 2001 066 722
- JP-A- 2002 048 803
- JP-A- 2002 082 120
- JP-A- 2005 010 115
- JP-A- 2006 133 232
- JP-A- 2008 008 711
- JP-A- 2009 025 144
- US-A- 4 755 356
- US-A1- 2003 099 573

## Description

### Technical Field

The present invention relates to, for example, a receptacle containing a test reagent from which a test reagent can be taken out using a needle.

### Background Art

Conventionally, there is known an inspection device which performs an operation of sucking the test reagent contained in a receptacle containing a test reagent using a needle movable in the directions of the X-,Y- and Z-axes, and subsequently moving the needle to a target position, and dropping the test reagent on a slide glass or the like.

A receptacle containing a test reagent used for such an inspection device has a receptacle body containing the test reagent, an upper surface formed to cover the upper part of the receptacle body, and a bottom formed to cover the lower part of the receptacle body. The upper surface has a passage hole formed thereon to insert a needle into the receptacle body. Furthermore, the upper surface has a lid part situated thereon for opening and closing the passage hole, so that closing the passage hole on the lid part prevents the test reagent in the receptacle from leaking to the outside from the passage hole when storing or transporting the receptacle containing a test reagent.

It is common for an inspection device to have a plurality of receptacles containing test reagents for an inspection collectively set on a rack. There is known a receptacle containing a test reagent, on which a label bearing information including, for example, the type of the test reagent is attached at the upper part, in order to check the type of the test reagent in the receptacle. The label has printed thereon information such as the type, expiration date, lot number, bottle number, and the like, of the test reagent contained.

Patent Literature 1 discloses a receptacle on which a flat lid part covering the entire upper surface of the receptacle is rotatably attached to open or close the passage hole.

In addition, Patent Literature 2 discloses a receptacle for use in the inspection device with a reading sensor installed thereabove, the receptacle having a label indicating information of the test reagent on its upper surface.

### Citation List

### Patent Literature

PTL 1: Japanese Translation of PCT International Application Publication No. JP 2011-524527
PTL 2: US 7642093

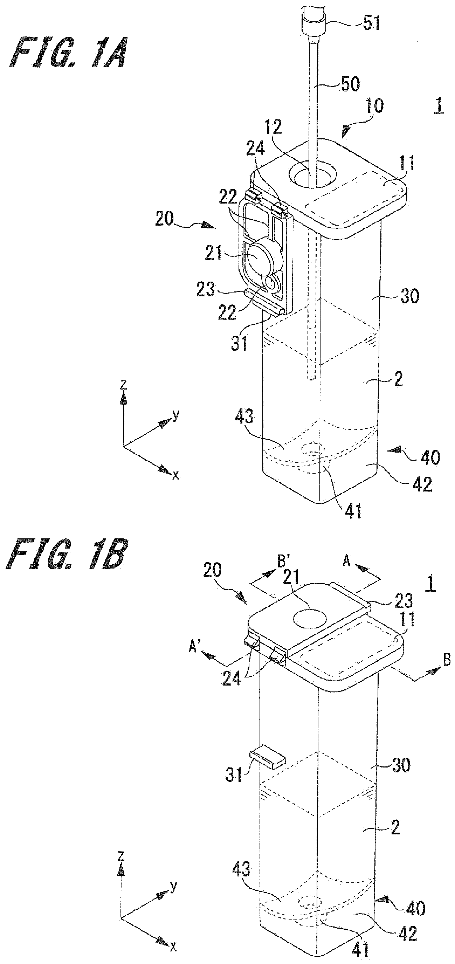

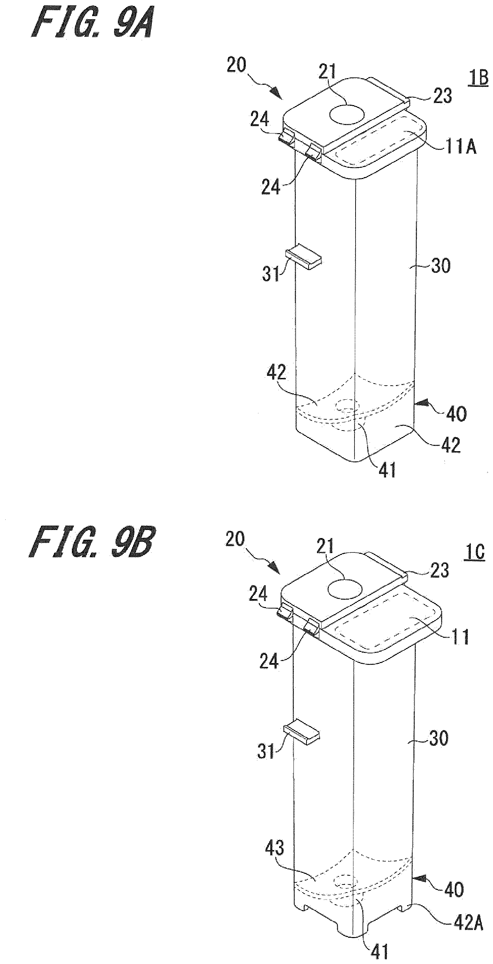

US 2003/099573 A1 relates to an automated tissue staining system and reagent containers for use with the system. As can be seen in Fig. 9 of US 2003/099573 A1, a reagent container 50 includes a two-dimensional bar code 140. Bar code 140 may be positioned on any surface of container 50 accessible to a bar code reader, such as optical reader 144 (Fig. 1A), but is typically positioned on the flat upper surface 138 of the upper wall 88 and adjacent to the neck 82.

As can be seen in Fig. 1 of US 4 755 356 A, a tube assembly 10 consists of a tube body 12 and an integrally attached cap portion 14. At one end of the tube body 12 is a base wall 18 which seals that end of the tube 10. The base wall is conical in shape, with a bottom tip 20 being formed in the shape of a hemisphere. At the end opposite the base wall 18, the tube 12 is formed to have an open top end 22. A circular aperture 24 is bounded by a collar 26, which has the same interior diameter as the tube wall 16 in the cylindrical portion of the body 12, but a significantly greater wall thickness. The collar 26 serves as the seating element for the cap 14 when the tube assembly is closed. Extending axially from the circumference of the collar 26 is a first projection 28 and a second projection 30. The projections 28 and 30 are selected to mesh with a first depression 32 and a second depression 34 formed on the cap 14 when the tube 10 is locked. A friction-fit seal is accomplished when a flared plug portion 36 on the cap 14 is caused to fit snugly into the aperture 24 and the cap is forced such that the projections 28 and 30 mate with the associated depression 32 and 34. The cap portion 14 is connected to the tube body portion 12 by a flexible hinge 38. Also formed on the cap portion 14 is a tab 40 to facilitate the opening and closing of the tube assembly 10.

As can be seen in Fig. 3 of WO 2011/108134 A1, a tube 11 of D3 is formed to have an open top end with the circular aperture 12a closed by a cap 2 which is connected to a collar 12 by a flexible hinge 3.

### Summary of Invention

### Technical Problem

When using an inspection device, it may be necessary, in order to confirm the identity of the test reagent contained in the receptacle, to check the content of the test reagent by reading the label attached to the receptacle containing a test reagent both in the state where the lid part of the receptacle containing a test reagent is closed and in the state where the lid part is open.

Reading of the label with the lid part closed is performed when registering, in a computer of the inspection device, the receptacle containing a test reagent to be newly used for the inspection. On the other hand, reading of the label with the lid part open is performed when performing an inspection using a receptacle containing a test reagent set on a rack of the inspection device. The inspection device finds a target receptacle containing a test reagent, based on the information of the label registered in the computer, and performs the inspection.

However, for the conventional receptacle containing a test reagent, the information of the label attached to the upper surface thereof is not able to be read because the lid part completely covers the upper surface in the state where the lid part is closed. In addition, the information of the label is not able to be read in the state where the lid part is open, even if the label is attached to the top surface of the lid part.

An object of the present invention, which has been made in view of the aforementioned situation, is to allow the information of the test reagent contained in the receptacle body to be appropriately read, regardless of whether the lid part is open or closed, and to be freely chosen.

The object is solved by the features defined in claim 1.

### Solution to Problem

In particular, the present invention is a receptacle containing a test reagent which contains a test reagent for performing an inspection using a needle.

This receptacle containing a test reagent includes a cylindrical receptacle body having a bottom, and an upper surface situated on the upper part of the receptacle body and having a passage part for inserting the needle.

In addition, the receptacle containing a test reagent includes an information display part situated on the upper surface to display information relating to the test reagent contained in the receptacle body, and a lid part connected to the upper surface and rotatable with respect to the receptacle body, for opening and closing the passage part.

The lid part closes off the passage part such that the information display part is visible.

### Advantageous Effects of Invention

According to the present invention, information of test reagent contained in the receptacle body can be appropriately read, regardless of whether the lid part is open or closed.

### Brief Description of Drawings

FIGS. 1A and 1B are perspective views illustrating an exemplary configuration of a receptacle containing a test reagent according to an embodiment of the present invention. FIG. 1A illustrates an exemplary state in which the lid part is open, and FIG. 1B illustrates an exemplary state in which the lid part is closed;

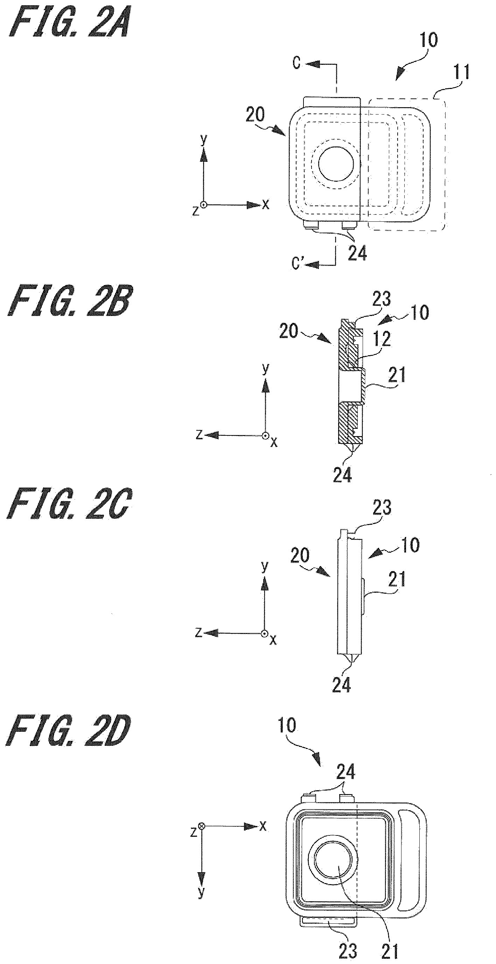

FIGS. 2A to 2D are explanatory diagrams illustrating an exemplary configuration of the upper surface and the lid part according to an embodiment of the present invention. FIG. 2A illustrates an exemplary top view of the upper surface with the lid part closed, FIG. 2B illustrates an exemplary cross-sectional view of the upper surface taken along a line C-C' of FIG. 2A with the lid part closed, FIG. 2C illustrates an exemplary back view of the upper surface with the lid part closed, and FIG. 2D illustrates an exemplary bottom view of the upper surface with the lid part closed;

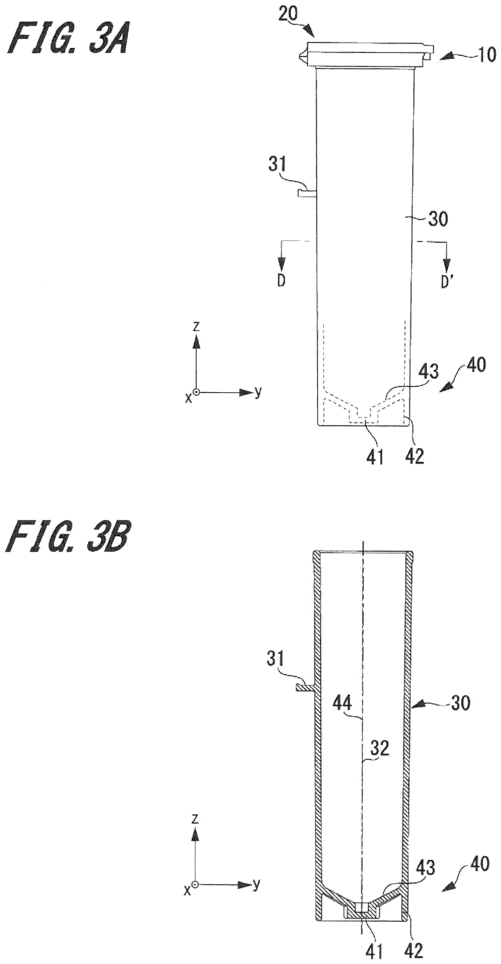

FIGS. 3A and 3B are explanatory diagrams illustrating an exemplary front view of a receptacle body according to an embodiment of the present invention. FIG. 3A illustrates an exemplary front view of the receptacle body, and FIG. 3B illustrates an exemplary cross-sectional view of the receptacle body taken along a line A-A' of FIG. 1B;

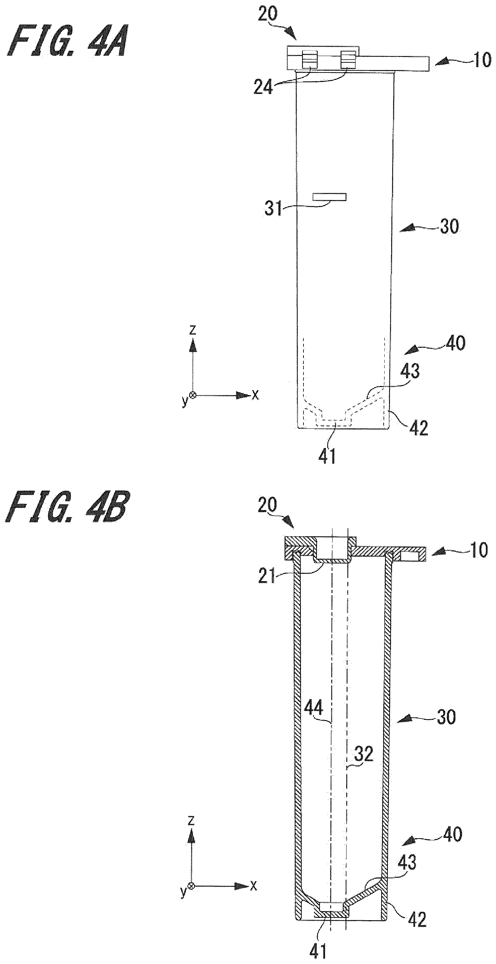

FIGS. 4A and 4B are explanatory diagrams illustrating an exemplary left side view of the receptacle body according to an embodiment of the present invention. FIG. 4A illustrates an exemplary left side view of the receptacle body, and FIG. 4B illustrates an exemplary cross-sectional view of the receptacle body taken along a line B-B' of FIG. 1B;

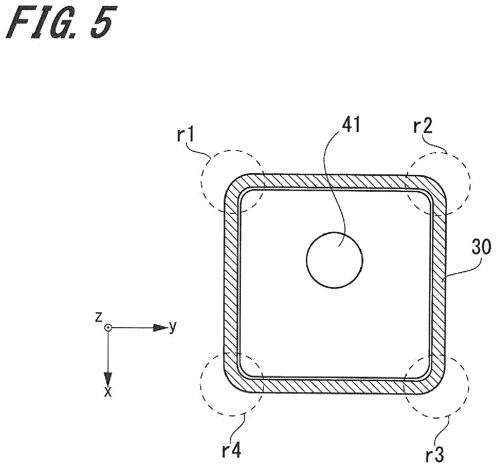

FIG. 5 illustrates an exemplary cross-sectional view of the receptacle body taken along a line D-D' of FIG. 3A;

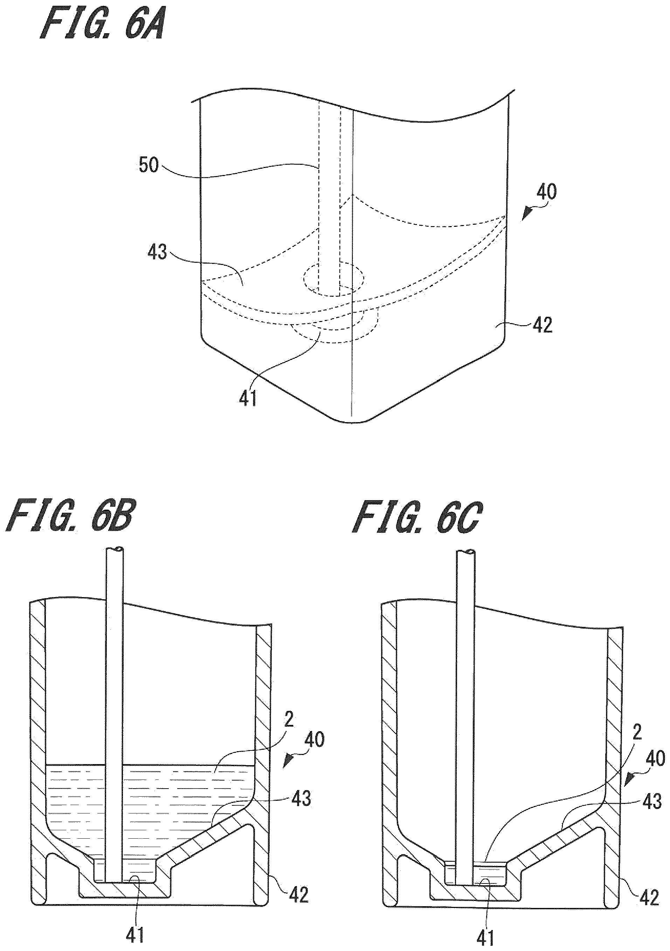

FIGS. 6A to 6C are enlarged views of the bottom according to an embodiment of the present invention. FIG. 6A illustrates an example of sucking the test reagent accumulated at the bottom with the needle, FIG. 6B illustrates an example in which the test reagent is accumulated at the bottom depicted as a cross-section taken along the line B-B' of FIG. 1B, and FIG. 6C illustrates an example in which the test reagent is accumulated in a concave portion depicted as a cross-section taken along the line B-B' of FIG. 1B;

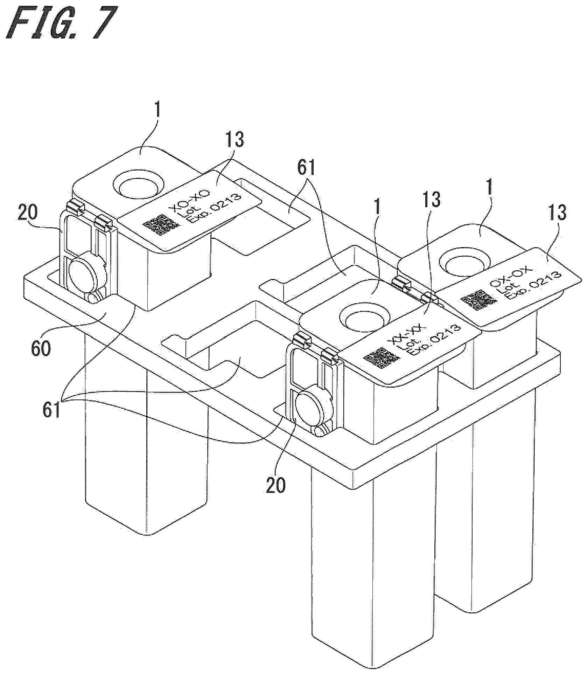

FIG. 7 is a perspective view of a rack on which receptacles containing a test reagent according to an embodiment of the present invention are set;

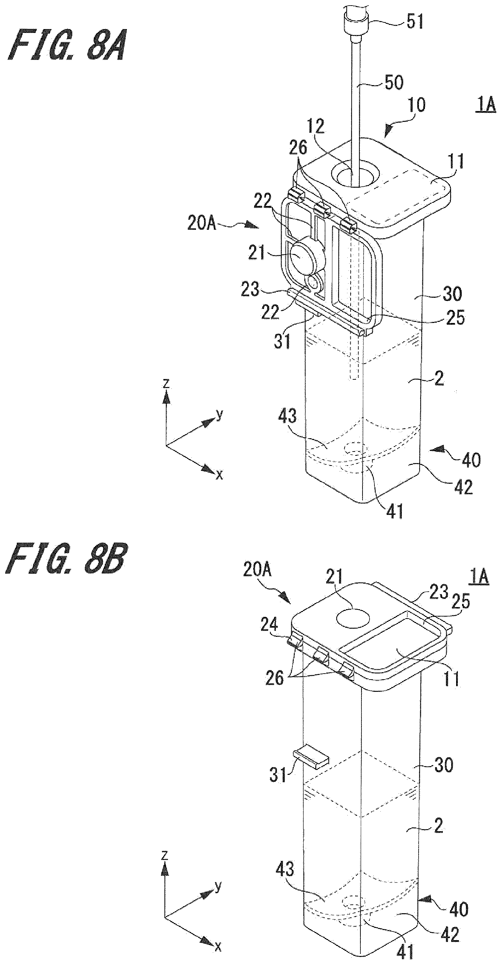

FIGS. 8A and 8B are perspective views illustrating an exemplary configuration of a receptacle containing a test reagent according to an exemplary variation of the embodiment of the present invention. FIG. 8A illustrates an exemplary state in which the lid part is open, and FIG. 8B illustrates an exemplary state in which the lid part is closed; and
FIGS. 9A and 9B are perspective views illustrating exemplary configurations of a receptacle containing a test reagent. FIG. 9A illustrates a perspective view of the receptacle containing a test reagent having an information display part configured so as not to extend outward from the receptacle body, in contrast to the embodiment of the invention, and FIG. 9B illustrates a perspective view of the receptacle containing a test reagent having four legs.

### Description of Embodiments

In the following, an embodiment of the present invention will be described, referring to accompanying drawings.

In the present specification and drawings, components having substantially identical functions or configurations are provided with identical reference numerals, with duplicate description thereof being omitted.

### <1. Exemplary Embodiment>

First, a configuration of a receptacle containing a test reagent 1 will be outlined, referring to FIGS. 1A and 1B.

FIGS. 1A and 1B are perspective views illustrating an exemplary configuration of the receptacle containing a test reagent 1. FIG. 1A illustrates an exemplary state in which a lid part 20 is open, and FIG. 1B illustrates an exemplary state in which the lid part 20 is closed.

The receptacle containing a test reagent 1 has a cylindrical receptacle body 30 having a bottom 40, a flat-plate-like upper surface 10 situated on the upper part of the receptacle body 30, and the flat-plate-like lid part 20 connected to an edge of the upper surface 10 and rotatable with respect to the receptacle body 30.

The receptacle body 30 is filled with a test reagent 2. When the receptacle body 30 is filled with the test reagent 2, the upper surface 10 of the receptacle body 30 is taken off, the receptacle body 30 is filled with the test reagent 2, and subsequently the upper surface 10 is welded to an aperture. The receptacle body 30 may be filled with the test reagent 2 using a nozzle inserted through a passage hole 12 (an example of the passage part) after the upper surface 10 has been welded to the receptacle body 30.

The upper surface 10 has formed thereon the passage hole 12 for inserting a needle 50 which sucks the test reagent 2, and an information display part 11 extending outside the receptacle body 30 and having attached thereto a label or the like bearing information of the test reagent 2. Forming the upper surface 10 integrally with the receptacle body 30 by heat welding or using an adhesive agent (e.g., photo curing resin) can prevent the test reagent 2 from leaking from the joint between the upper surface 10 and the receptacle body 30. The edge of the upper surface 10 has the lid part 20 rotatably attached via two hinges 24. In addition, the lid part 20 is enhanced in strength by provision of a rib 22. Fluid leakage of the test reagent 2 when storing or transporting the receptacle containing a test reagent 1 is prevented by closing off of the passage hole 12 with a fitting part 21 formed on the lid part 20.

The needle 50 used in the inspection device is held by a needle holding part 51 attached to an arm (not illustrated) of the inspection device, whose insertion operation to the passage hole 12 is controlled by the control unit (not illustrated) . The needle 50 is a circular tube having a small internal diameter (e.g., about 1.45 mm), the tip of which being horizontally cut. The tip of the needle 50 is open, and thus the inspection device allows the test reagent 2 to be sucked from the tip of the needle 50 by moving the tip of the needle 50 below the liquid level of the test reagent 2.

The bottom 40 has formed thereon a concave portion 41 for accumulating the test reagent 2, and a slant portion 43 for moving the test reagent 2 toward the concave portion 41. The concave portion 41 is a recessed portion formed at the lowest position of the receptacle body 30. The test reagent 2 is accumulated in the concave portion 41 even when remaining amount of the test reagent 2 becomes small in the receptacle, and therefore the test reagent 2 can be sucked by insertion of the tip of the needle 50 into the concave portion 41.

The receptacle containing a test reagent 1 has a skirt-like leg 42 situated thereon, which is formed so as to surround the concave portion 41 at the lower part of the receptacle body 30, the leg 42 allowing the receptacle containing a test reagent 1 to self-stand.

In a state in which the lid part 20 is open as illustrated in FIG. 1A, the passage hole 12 is opened up. On this occasion, a projecting part 23 of the lid part 20 engages with a holding part 31 situated at the side face of the receptacle body 30, with the lid part 20 conforming to the side face of the receptacle body 30, whereby the lid part 20 is fixed. While keeping this state, it is possible to set the receptacle containing a test reagent 1 on a rack 60 (see FIG. 7 described below) of the inspection device. After the receptacle containing a test reagent 1 is set, the tip of the needle 50 is received through the passage hole 12 and the test reagent 2 contained in the receptacle body 30 can be sucked.

On the other hand, in the state where the lid part 20 is closed, as illustrated in FIG. 1B, the fitting part 21 of the lid part 20 closes off the passage hole 12. On this occasion, the projecting part 23 of the lid part 20 engages with the edge of the upper surface 10, whereby the lid part 20 is fixed. Accordingly, it is possible to prevent the test reagent 2 filled in the receptacle body 30 from leaking from the passage hole 12 even when the receptacle containing a test reagent 1 is vibrated during transportation or the like.

Next, each part will be descried in detail.

First, an exemplary configuration of the upper surface 10 and the lid part 20 will be described.

FIGS. 2A to 2D are explanatory diagrams illustrating an exemplary configuration of the upper surface 10 and the lid part 20. FIG. 2A illustrates an exemplary top view of the upper surface 10 with the lid part 20 closed. FIG. 2B illustrates an exemplary cross-sectional view of the upper surface 10 taken along the line C-C' of FIG. 2A with the lid part 20 closed. FIG. 2C illustrates an exemplary back view of the upper surface 10 with the lid part 20 closed, and FIG. 2D illustrates an exemplary bottom view of the upper surface 10 with the lid part 20 closed.

With a conventional receptacle containing a test reagent, it has been impossible to form a large upper surface and therefore the label had to be made small. With a small label, the size of the 2-dimensional code or the like that can be printed on the label is small, and thus it sometimes happened that a low-resolution bar code reader failed to accurately read the information associated with the label. On the other hand, there has also been a problem that enlarging the entire size of a receptacle containing a test reagent in order to attach a larger label on the upper surface may limit the number of receptacles containing a test reagent allowed to be set on a rack.

The receptacle containing a test reagent 1 according to the embodiment, provided with the information display part 11 formed with the upper surface 10 extending outside the receptacle body 30, displays on the information display part 11 information relating to the test reagent 2 contained in the receptacle body 30. A label having printed thereon 1-dimensional codes, 2-dimensional codes, characters, figures, symbols, or the like may be an example of information relating to the test reagent 2. The embodiment allows usage of a large label, whereby 2-dimensional codes, which have become large in size by including a large amount of information, can be printed on the label.

As described above, the lid part 20 is situated in a manner rotatably connected to the upper surface 10 and capable of closing off the passage hole 12 such that the information display part 11 is visible. As illustrated in FIG. 1A, the needle 50 is inserted from the passage hole 12 and the test reagent 2 contained in the receptacle body 30 can be taken out.

The lid part 20 is formed so that the area of the top surface of the lid part 20 is approximately half the area of the upper surface 10. The lid part 20 can cover the part other than the information display part 11. Forming the size of the lid part 20 to be smaller than the size of the upper surface 10 allows a bar code reader or the like to read information of the information display part 11 even in a state in which the lid part 20 is closed. Accordingly, a computer can manage the type, expiration date, lot number, bottle number, or the like, of the test reagent 2 printed on the label attached to the information display part 11. Here, characters, symbols, or the like may be directly printed on the information display part 11 in place of a label.

The amount of the test reagent 2 is measured by the inspection device when the receptacle containing a test reagent 1 is set on the rack 60 (see FIG. 7 described below) for the first time. In the measurement, a liquid level sensor of the inspection device measures the liquid level height from the bottom surface to the liquid level of the test reagent 2 contained in the receptacle containing a test reagent 1 which has been set on the rack 60. A computer of the inspection device then associates the measured liquid level height with a bottle number. Subsequently, on the basis of specification of the inspection method registered in the computer of the inspection device, the amount used is subtracted, each time a measurement is performed, from the initial amount of the test reagent 2 obtained from the liquid level height. As thus described, a management is performed in a manner associating the information obtained in the course of inspection with a bottle number registered in the computer, making it possible to grasp the number of the receptacles containing a test reagent 1 set on the rack 60.

The external diameter of fitting part 21 of the lid part 20 is formed so as to conform to the internal diameter of the passage hole 12. Accordingly, when the lid part 20 is closed, the fitting part 21 closes off the passage hole 12, whereby liquid leakage from the receptacle body 30 can be prevented. In addition, the back side of the lid part 20 is reinforced by a plurality of ribs 22 (see FIG. 1A) so that the lid part 20 is not easily deformed even when a pressing force is applied on the lid part 20 along with opening and closing of the lid part 20.

In addition, forming the information display part 11 in a manner extending outward from the receptacle body 30 allows a worker to grasp the receptacle containing a test reagent 1 with the worker' s fingers hooked on the information display part 11 when holding the receptacle body 30.

Next, an exemplary configuration of the receptacle body 30 will be described.

FIGS. 3A and 3B are explanatory diagrams illustrating an exemplary front view of the receptacle body 30. FIG. 3A illustrates an exemplary front view of the receptacle body 30, and FIG. 3B illustrates an exemplary cross-sectional view of the receptacle body 30 taken along the line A-A' of FIG. 1B.

FIGS. 4A and 4B are explanatory diagrams illustrating an exemplary left side view of the receptacle body 30. FIG. 4A illustrates an exemplary left side view of the receptacle body 30, and FIG. 4B illustrates an exemplary cross-sectional view of the receptacle body 30 taken along the line B-B' of FIG. 1B.

FIG. 5 illustrates an exemplary cross-sectional view of the receptacle body 30 taken along the line D-D' of FIG. 3A.

The receptacle body 30, formed with PP (polypropylene), for example, is transparent or semitransparent so that the amount of the test reagent 2 is visible from the outside. In addition, the receptacle body 30 has the holding part 31 on the left side face. The holding part 31 holds and fixes, against the receptacle body 30, the projecting part 23 of the lid part 20 with the passage hole 12 open. Accordingly, the lid part 20 can be kept stationary during the inspection. In addition, the receptacle body 30 can be inserted into a holder 61 (see FIG. 7 described below) situated on the rack 60 of the inspection device, with the lid part 20 held and fixed by the holding part 31.

FIGS. 3B and 4B illustrate examples of a central axis line 32 of the receptacle body 30 and a central axis line 44 of the concave portion 41. As illustrated in FIG. 3B, the central axis line 32 of the receptacle body 30 coincides with the central axis line 44 of the concave portion 41 in the front view of the receptacle body 30.

However, as illustrated in FIG. 4B, the central axis line 32 of the receptacle body 30 and the central axis line 44 of the concave portion 41 do not coincide in the left side view of the receptacle body 30. This is because the lid part 20 according to the embodiment is formed to be approximately half the size of the upper surface 10 and therefore letting the central axis line of the passage hole 12 and the central axis line 44 of the concave portion 41 coincide with each other causes the central axis line 44 of the concave portion 41 to disagree with the central axis line 32 of the receptacle body 30.

As illustrated in FIG. 5, the cross-section of the receptacle body 30 in a direction perpendicular to the central axis line 32 of the receptacle body 30 is assumed to be rectangular. In comparison with a receptacle containing a test reagent having a circular cross-section, the capacity of the receptacle body 30 can be made larger than the capacity of the circular receptacle containing a test reagent when the length of a side of the receptacle body 30 and the diameter of the circular receptacle containing a test reagent are the same. Accordingly, when there are a limited number of the holders 61 of the rack 60 having set thereon the receptacle containing a test reagent 1, the capacity per receptacle can be increased so that the inspection can be performed using a larger amount of the test reagent 2.

In addition, when the corner of the internal surface of the receptacle body 30 is processed at a right angle, the test reagent 2 may stick to the corner, and the test reagent 2 may not easily drop downward. In the embodiment, R-processed R-portions r1 to r4 are situated at the corner of the internal surface of the receptacle body 30, as illustrated in FIG. 5. Accordingly, the test reagent 2 contained in the receptacle body 30 can be prevented from sticking to the corner of the receptacle body 30.

It is desirable to make the size of the aperture of the receptacle body 30 before the lid part 20 is attached larger than the size of the bottom 40, in consideration of the ease of coming off the die.

Next, an exemplary configuration of the bottom 40 will be described.

FIGS. 6A to 6C are enlarged views of the bottom 40. FIG. 6A illustrates a state in which the tip of the needle 50 is received in the concave portion 41, FIG. 6B illustrates an example in which the test reagent 2 is accumulated at the bottom 40 depicted as a cross-section taken along the line B-B' of FIG. 1B, and FIG. 6C illustrates an example in which the test reagent 2 is accumulated in the concave portion 41 depicted as a cross-section taken along the line B-B' of FIG. 1B.

In a conventional receptacle containing a test reagent, it is necessary to insert the tip (suction port) of the needle so that the tip is located below the liquid level of the test reagent when sucking the test reagent using a needle. On this occasion, there has been a case such that a portion of the test reagent which has not been completely sucked by the needle is accumulated at the bottom of the receptacle containing a test reagent due to the gap (dead volume) from the liquid level of the test reagent to the tip of the needle dipped in the test reagent. The amount of the test reagent which has not been completely sucked is proportional to the area of the bottom surface. Accordingly, it has been necessary to put a larger amount of the test reagent than the amount required for inspection into a conventional, commercially available receptacle containing a test reagent.

In addition, although a receptacle formed by a cylindrical side face and a conical bottom surface for use in an ordinary biochemistry inspection or the like is designed so that the test reagent is accumulated in the conical bottom surface when the remaining amount of test reagent becomes small, the receptacle cannot self-stand independently because the bottom is also cylindrical.

Although a receptacle containing a test reagent having a skirt part situated at the bottom of the receptacle body to be able to self-stand is commercially available, there has been a problem that a portion of the test reagent which has not been completely sucked by the needle is accumulated at the bottom. The receptacle is desirable to be a self-standing type, also for improving the efficiency of dispensing.

The receptacle containing a test reagent 1 according to the embodiment has the bottom 40 situated at the lower part of the receptacle body 30, and the concave portion 41 receiving the tip of the needle 50 is formed at the bottom 40. The diameter of the concave portion 41 is formed to be slightly larger than the outer diameter of the needle 50, so that the tip of the needle 50 inserted through the passage hole 12 can reach the bottom of the concave portion 41. Accordingly, the tip of the needle 50 is received as far as the bottom surface of the concave portion 41 and can suck the test reagent 2 contained in the receptacle body 30. In addition, since the bottom surface area of the concave portion 41 is small, the amount of the test reagent 2 which may not be completely sucked by the needle 50 can be reduced.

The bottom 40 has the slant portion 43 situated thereon, which slants from the side face of the receptacle body 30 toward the concave portion 41. Accordingly, the test reagent 2 can be guided along the slant portion 43 and accumulated in the concave portion 41 when the remaining amount of test reagent contained in the receptacle body 30 becomes small. In addition, applying R-processing on the boundary where the internal surface of the receptacle body 30 and the slant portion 43 are connected can prevent the test reagent 2 from sticking to the boundary part.

In addition, a part where the leg 42 formed so as to surround the concave portion 41 contacts with the desk is formed to be flat. Accordingly, the frictional force between the leg 42 and the ground-contact surface becomes larger, making the receptacle containing a test reagent 1 unlikely to fall even when the desk or the like on which the self-standing receptacle containing a test reagent 1 is tilted.

FIG. 7 is a perspective view of the rack 60 having set thereon the receptacles containing a test reagent 1.

The rack 60 of the inspection device has a plurality of holders 61 situated for holding and fixing the receptacles containing a test reagent 1 which have been set thereon. The information display part 11 of the receptacle containing a test reagent 1 has attached thereto a label 13 bearing a 2-dimensional code indicating information relating to the test reagent 2 contained in the receptacle containing a test reagent 1.

The holder 61 is a passage hole formed by hollowing out a flat plate of a substantial thickness. The shape of the passage hole is formed so as to conform to the external shape of the receptacle containing a test reagent 1 with the projecting part 23 of the open lid part 20 fixed to the holding part 31 of the receptacle body 30. Accordingly, the receptacle containing a test reagent 1 which has been set on the rack 60 can maintain its posture even when vibration is applied thereon during transportation or the like. In addition, providing passage holes with a common shape makes it possible to set the receptacles containing a test reagent 1 on the rack 60 with the orientations of the receptacles containing a test reagent 1 being aligned. In addition, since the receptacles containing a test reagent 1 can be set with an aligned orientation, it becomes easier to preliminarily determine the insertion position of the needle 50 moving relative to the rack 60 or the reading position of label 13 by a bar code reader, and automate the inspection using a test reagent.

In addition, the inspection device which performs a predetermined inspection using the receptacle containing a test reagent 1 can detect the liquid level height of the test reagent 2 contained in the receptacle body 30 through the passage hole 12 using a liquid level sensor (not illustrated). The inspection device can subsequently calculate, from the detected liquid level height, the amount of the test reagent 2 contained in the receptacle body 30.

In addition, when using different types of the test reagent 2, the inspection device repeats the operations of sucking the test reagent 2 from one of the receptacles containing a test reagent 1 and dropping it onto a slide glass or the like, and subsequently cleaning the needle 50 and moving the needle 50 toward another receptacle containing a test reagent 1 to suck the test reagent 2. Therefore, in order to shorten the cleaning time of the needle 50, the needle 50 may be inserted as deep as several millimeters, for example, below the liquid level.

According to the receptacle containing a test reagent 1 according to the embodiment described above, the size of the lid part 20 is assumed to be approximately half the size of the upper surface 10. Accordingly, information of the information display part 11 can be read by a bar code reader or the like, even with the passage hole 12 closed off by the lid part 20. In addition, since the information display part 11 is visible even with the lid part 20 open, information can be read by a bar code reader or the like. As thus described, the information display part 11 is not covered with the lid part 20 even with opening and closing of the lid part 20, whereby information on the label or the like attached to the information display part 11 can be reliably read.

In addition, the receptacle containing a test reagent 1 is formed to have a rectangular cross-section and therefore can contain the test reagent 2 with a high efficiency.

In addition, forming the concave portion 41 at the bottom 40 allows the test reagent 2 to be accumulated in the concave portion 41 when the remaining amount of test reagent 2 in the receptacle containing a test reagent 1 becomes small, whereby the amount of the test reagent 2 which may not be completely sucked by the needle 50 can be reduced.

### <2-1. First Exemplary Variation>

The size of the circumference of the lid part 20 may be formed approximately as large as the size of the circumference of the upper surface 10, as long as the label or the like attached to the information display part 11 can be read. Such an exemplary variation of the lid part 20 will be described, referring to FIGS. 8A and 8B.

FIGS. 8A and 8B are perspective views illustrating an exemplary configuration of a receptacle containing a test reagent according to an exemplary variation of the embodiment of the present invention. FIG. 8A illustrates an exemplary state in which a lid part 20A is open, and FIG. 8B illustrates an exemplary state in which a lid part 20A is closed.

The size of the circumference of the lid part 20A provided at a receptacle containing a test reagent 1A is formed approximately as large as the size of circumference of the upper surface 10. The lid part 20A is configured to have a frame 25 formed by hollowing out a part of the lid part 20A. The area of the lid part 20A other than the hollowed-out part is formed to be smaller than the area of the upper surface 10, and therefore the size of the lid part 20A is formed to be smaller than the size of the upper surface 10. The position at which the lid part 20A is hollowed out is the part that overlaps with the information display part 11 when the lid part 20A is closed. The lid part 20A has three hinges 26 which joint the frame 25 and the upper surface 10, the hinges 26 allowing the lid part 20A to be rotatable with respect to the receptacle body 30.

The information display part 11 is visible through the hollowed-out part even when the lid part 20A is closed. In addition, the lid part 20A is held by the holding part 31 of the receptacle body 30 when the lid part 20A is open, whereby the lid part 20A does not shield the information display part 11.

### <2-2. Second Exemplary Variation>

Although the information display part 11 provided in the receptacle containing a test reagent 1 is assumed to be extending from the side face of the receptacle body 30 in the embodiment described above, in an unclaimed example the information display part 11 need not necessarily be extending outside the side face of the receptacle body 30. In addition, also the leg 42 need not necessarily be formed like a flat plate. Such an exemplary variation of the information display part 11 and the leg 42 will be described, referring to FIGS. 9A and 9B.

FIGS. 9A and 9B are perspective views illustrating exemplary configurations of a receptacle containing a test reagent. FIG. 9A illustrates a perspective view of a receptacle containing a test reagent 1B having an information display part 11A configured so as not to extend outward from the receptacle body 30, and FIG. 9B illustrates a perspective view of a receptacle containing a test reagent 1C having four legs 42A.

The receptacle containing a test reagent 1B illustrated in FIG. 9A is shaped so as to prevent the upper surface 10 on which the information display part 11A is formed from extending outward from the receptacle body 30. In other words, the size of the upper surface 10 is made approximately equal to the size of the aperture of the receptacle body 30. The upper surface 10 as described above is effective in a case where the amount of information relating to the test reagent 2 is small and thus a small label size suffices.

The receptacle containing a test reagent 1C illustrated in FIG. 9B has four legs 42A which have resulted from cutting notches in the leg 42. Cutting notches in the leg 42 can reduce the material forming the leg 42.

### <2-3. Other Exemplary Variations>

The following exemplary variation can be used, other than the exemplary variations of the receptacle containing a test reagent 1 illustrated in FIGS. 8A and 8B and 9A and 9B.

For example, a transparent or semitransparent material may be chosen for the receptacle containing a test reagent 1 so that the amount of the test reagent 2 is visible from the outside.

The receptacle body 30 may be made opaque so as to prevent the test reagent 2 contained therein from deteriorating due to light.

The cross-sectional shape of the receptacle body 30 may be polygonal such as rectangular or the like.

In addition, for a case where the receptacle containing a test reagent 1 is cryogenically preserved after inspection, it is desirable to use a material with tolerance to temperature variation for the receptacle containing a test reagent 1. Furthermore, in order to use the receptacle containing a test reagent 1 repeatedly, it is desirable to use a material having rigidity such that the tip of the needle 50 is unlikely to be deformed when contacting with the bottom 40.

Additionally, instead of forming the passage hole 12 on the upper surface 10, the upper surface 10 may be provided with a notch reaching up to the position where the passage hole 12 is formed, as an example of the passage part. In such a case, the fitting part 21 of the lid part 20 is formed so as to conform to the shape of the notch formed on the upper surface 10.

In addition, when shipping the receptacle containing a test reagent 1, it suffices to close the lid part 20 after having poured the test reagent 2 into the receptacle body 30, and shrink-wrap the receptacle body 30 and the upper surface 10 altogether with a transparent film. Accordingly, leakage of the test reagent 2 from the receptacle containing a test reagent 1 during transportation can be prevented.

In addition, the information display part 11 may be hollowed out when there is a margin to which a label or the like can be attached. Accordingly, the necessary amount of material to be used for the receptacle containing a test reagent 1 can be suppressed, and the manufacturing cost can be reduced.

In addition, a scale may be situated on the surface of the receptacle body 30 to make it easier to check the amount of the test reagent 2 contained from the outside.

In addition, although the lid part 20 is attached to the upper surface 10 via two hinges 26, it may be attached using other rotating members such as living hinges or the like.

In addition, the present invention is not limited to the aforementioned embodiments, and it goes without saying that various applications and variations can be made as long as they do not deviate from the scope of the present invention described in the appended claims.

### Reference Signs List

- 1: receptacle containing a test reagent
- 10: upper surface
- 11: information display part
- 12: passage hole
- 20: lid part
- 30: receptacle body
- 40: bottom
- 41: concave portion
- 42: leg
- 50: needle

## Claims

1. A receptacle containing a test reagent (1) which contains a test reagent (2) for performing an inspection using a needle (50), the receptacle comprising:
a receptacle body (30) having a bottom (40);
an upper surface (10) situated on the upper part of the receptacle body and having a passage hole (12) for inserting the needle;
an information display part (11) situated on the upper surface to display information relating to the test reagent contained in the receptacle body; and
a lid part (20) closes off the passage hole(12) such that the information display part is visible,
**characterized in that**
said information display part (11) formed with the upper surface (10) extends outside from the side face of the receptacle body (30), and
the lid part (20) is connected to the upper surface (10) and rotatable with respect to the receptacle body (30), for opening and closing the passage hole (12).

2. The receptacle containing a test reagent according to claim 1, comprising, at the bottom (40), a concave portion (41) receiving a tip of the needle (50), wherein
the center (44) of the concave portion (41) is formed at a position different from a position where a central axis line (32) of the receptacle body intersects with the bottom.

3. The receptacle containing a test reagent according to claim 2, comprising a leg (42) that allows the receptacle body to self-stand, at the lower part of the receptacle body.

4. The receptacle containing a test reagent according to claim 2, comprising, at the bottom (40), a slant portion (43) that slants from the side face of the receptacle body toward the concave portion (41).

5. The receptacle containing a test reagent according to claim 3, comprising, at the bottom (40), a slant portion (43) that slants from the side face of the receptacle body toward the concave portion (41).

6. The receptacle containing a test reagent according to claim 1, wherein the cross-sectional shape of the receptacle body in a direction perpendicular to the central axis line of the receptacle body is rectangular, and a rounded R-portion (r1 to r4) is provided at a corner of the receptacle body.

7. The receptacle containing a test reagent according to claim 1, comprising a holding part (31) configured to hold the lid part (20) on the receptacle body with the passage part open.

## Patentansprüche

1. Behälter, der ein Testreagens (1) enthält, das ein Testreagens (2) zur Durchführung einer Inspektion unter Verwendung einer Nadel (50) aufweist, wobei der Behälter umfasst:
einen Behälterkörper (30) mit einem Boden (40);
eine obere Fläche (10), die auf dem Oberteil des Behälterkörpers angeordnet ist und ein Durchgangsloch (12) zum Einführen der Nadel aufweist;
ein Informationsanzeigeteil (11), das auf der oberen Fläche angeordnet ist, um Informationen über das im Behälterkörper enthaltene Testreagens anzuzeigen; und
ein Deckelteil (20), das das Durchgangsloch (12) so verschließt, dass das Informationsanzeigeteil sichtbar ist,
**dadurch gekennzeichnet, dass**
sich das Informationsanzeigeteil (11), das mit der oberen Fläche (10) ausgebildet ist, außerhalb von der Seitenfläche des Behälterkörpers (30) erstreckt, und
das Deckelteil (20) mit der oberen Fläche (10) verbunden und in Bezug auf den Behälterkörper (30) drehbar ist, um das Durchgangsloch (12) zu öffnen und zu schließen.

2. Behälter, der ein Testreagenz enthält, nach Anspruch 1, der an der Unterseite (40) einen konkaven Abschnitt (41) aufweist, der eine Spitze der Nadel (50) aufnimmt, wobei
die Mitte (44) des konkaven Abschnitts (41) an einer Position ausgebildet ist, die sich von einer Position unterscheidet, in der sich eine Mittelachsenlinie (32) des Behälterkörpers mit dem Boden schneidet.

3. Behälter, der ein Testreagenz enthält, nach Anspruch 2, mit einem Fuß (42) im unteren Teil des Behälterkörpers, der es dem Behälterkörper ermöglicht, selbstständig zu stehen.

4. Behälter, der ein Testreagenz enthält, nach Anspruch 2, mit einem schrägen Abschnitt (43) am Boden (40), der sich von der Seitenfläche des Behälterkörpers in Richtung des konkaven Abschnitts (41) neigt.

5. Behälter, der ein Testreagenz enthält, nach Anspruch 3, mit einem schrägen Abschnitt (43) am Boden (40), der sich von der Seitenfläche des Behälterkörpers in Richtung des konkaven Abschnitts (41) neigt.

6. Behälter, der ein Testreagenz enthält, nach Anspruch 1, wobei die Querschnittsform des Behälterkörpers in einer Richtung senkrecht zur Mittelachsenlinie des Behälterkörpers rechteckig ist und an einer Ecke des Behälterkörpers ein abgerundeter R-Teil (r1 bis r4) vorgesehen ist.

7. Behälter, der ein Testreagenz enthält, nach Anspruch 1, mit einem Halteteil (31), das konfiguriert ist, das Deckelteil (20) auf dem Behälterkörper bei offenem Durchgangsteil zu halten.

## Revendications

1. Récipient contenant un réactif d'essai (1) qui contient un réactif d'essai (2) pour réaliser un contrôle à l'aide d'une aiguille (50), le récipient comprenant :
un corps de récipient (30) ayant un fond (40) ;
une surface supérieure (10) située sur la partie supérieure du corps de récipient et ayant un trou de passage (12) pour insérer l'aiguille ;
une partie d'affichage d'information (11) située sur la surface supérieure pour afficher l'information concernant le réactif d'essai contenu dans le corps de récipient ; et
une partie de couvercle (20) ferme le trou de passage (12) de sorte que la partie d'affichage d'information est visible,
**caractérisé en ce que** ;
ladite partie d'affichage d'information (11) formée avec la surface supérieure (10) s'étend vers l'extérieur à partir de la face latérale du corps de récipient (30), et
la partie de couvercle (20) est raccordée à la surface supérieure (10) et peut tourner par rapport au corps de récipient (30), pour l'ouverture et la fermeture du trou de passage (12).

2. Récipient contenant un réactif d'essai selon la revendication 1, comprenant, au fond (40), une partie concave (41) recevant une pointe de l'aiguille (50), dans lequel :
le centre (44) de la partie concave (41) est formé dans une position différente d'une position dans laquelle une ligne d'axe centrale (32) du corps de récipient coupe le fond.

3. Récipient contenant un réactif d'essai selon la revendication 2, comprenant une patte (42) qui permet au corps de récipient de tenir seul, au niveau de la partie inférieure du corps de récipient.

4. Récipient contenant un réactif d'essai selon la revendication 2, comprenant, au fond (40), une partie inclinée (43) qui s'incline de la face latérale du corps de récipient vers la partie concave (41).

5. Récipient contenant un réactif d'essai selon la revendication 3, comprenant, au fond (40), une partie inclinée (43) qui s'incline de la face latérale du corps de récipient vers la partie concave (41).

6. Récipient contenant un réactif d'essai selon la revendication 1, dans lequel la forme transversale du corps de récipient, dans une direction perpendiculaire à la ligne d'axe centrale du corps de récipient, est rectangulaire, et une partie R arrondie (r1 à r4) est prévue au niveau d'un coin du corps de récipient.

7. Récipient contenant un réactif d'essai selon la revendication 1, comprenant une partie de maintien (31) configurée pour maintenir la partie de couvercle (20) sur le corps de récipient avec la partie de passage ouverte.
